# EUROPÄISCHE PATENTSCHRIFT

(11) **EP 0 831 210 B1**
(45) Veröffentlichungstag und Bekanntmachung des Hinweises auf die Patenterteilung: **02.01.2002**
(21) Anmeldenummer: 97115902.5
(22) Anmeldetag: 12.09.1997
(51) Int. Cl.: F01N 3/20, F02B 37/18, F02B 37/16

(54) **Brennkraftmaschine mit Abgasturbolader**
Internal combustion engine having an exhaust turbocharger
Moteur à combustion interne à turbocompresseur

(30) Priorität: 24.09.1996 DE 19639146
(43) Veröffentlichungstag der Anmeldung: 25.03.1998
(73) Patentinhaber: DaimlerChrysler AG, 70567 Stuttgart (DE)
(72) Erfinder: Brösecke, Harald, 70597 Stuttgart (DE); Klein, Rudolf, 71384 Weinstadt (DE)

(56) Entgegenhaltungen:
- US-A- 4 235 076
- US-A- 4 437 311
- PATENT ABSTRACTS OF JAPAN vol. 006, no. 220 (M-169), 5.November 1982 & JP 57 126516 A (FUJI JUKOGYO KK), 6.August 1982,

## Beschreibung

Die Erfindung bezieht sich auf eine Brennkraftmaschine nach dem Oberbegriff des Anspruchs 1.

Brennkraftmaschinen, die einen Abgasstrang mit einem Abgaskatalysator, einen Abgasturbolader mit stromaufwärts des Abgaskatalysators im Abgasstrang befindlicher Turbine und eine die Abgasturbine umgehende Bypassleitung mit Bypassventil aufweisen, sind in der Patentschrift US 4.356.695, der Offenlegungsschrift WO 91/16529 und der Offenlegungsschrift DE 38 07 998 A1 beschrieben. Das Bypassventil wird jeweils durch den Druck in einer Saugrohrleitung betätigt und so angesteuert, daß es bei hohem Druck in der Einlaßleitung öffnet und ein Teilabgasstrom die Abgasturbine umgeht.

Bei einer aus der Offenlegungsschrift DE 43 11 904 A1 bekannten Brennkraftmaschine sind eine Bypassleitung, die stromaufwärts der Abgasturbine von der Abgasleitung abzweigt und durch ein ansteuerbares Bypassventil geöffnet oder geschlossen wird, und ein paralleler Abgasleitungszweig getrennt geführt und beaufschlagen jeweils einen eigenen Katalysatorteil. Bei einem Kaltstart bleibt das Bypassventil geschlossen, um alles Abgas auf die Abgasturbine und den zugehörigen Katalysatorteil zu leiten. Die Bypassleitung selbst wird erst bei zu hohem Ladedruck zur Begrenzung des Ladedrucks geöffnet.

Die Offenlegungsschrift DE 31 15 739 A1 beschreibt eine Abgasleitungsanlage, bei der ein Startkatalysator stromabwärts einer Abgasturbine eines Abgasturboladers und ein Hauptkatalysator stromabwärts des Startkatalysators in der Abgasleitung angeordnet sind. Eine Bypassleitung mit zugeordnetem Bypassventil zweigt stromaufwärts der Abgasturbine von der Abgasleitung ab und mündet in diese zwischen Startkatalysator und Hauptkatalysator wieder ein. Das durch den Ladedruck gesteuerte Bypassventil wird bei hoher Last und Drehzahl geöffnet, so daß dann nur ein Teil des gesamten Abgasstroms über den Startkatalysator strömt und dessen thermische Belastung verringert ist.

Die Offenlegungsschrift DE 41 39 291 A1 offenbart eine Vorrichtung zur schnelleren Abgasentgiftung des Abgases einer Brennkraftmaschine nach einem Kaltstart. Stromauf einer Abgasturbine eines Abgasturboladers verzweigt sich eine Hauptabgasleitung in eine zu einem Startkatalysator und daraufhin zu der Abgasturbine führende Abgasleitung, eine parallel hierzu ebenfalls in die Abgasturbine mündende zusätzliche Abgasleitung und eine Bypassleitung, die unter Umgehung der Abgasturbine vor dem Hauptkatalysator wieder in die Hauptabgasleitung einmündet. Die Verteilung des Abgasstroms auf die drei Zweige erfolgt durch eine in der Verzweigung angeordnete Klappe, die durch ein elektronisches Steuergerät und einen elektrischen Stellmotor gesteuert wird. In einem Kaltfahrbereich wird der gesamte Abgasstrom über den Startkatalysator und die Abgasturbine geleitet. Erst bei zu hohem Ladedruck wird zur Steuerung des Ladedrucks ein Teilabgasstrom durch die Bypassleitung geführt.

Aus der FR 2 650 860 ist eine Brennkraftmaschine bekannt, bei der das Bypassventil während einer Kaltstartphase der Brennkraftmaschine in Abhängigkeit von einem motortemperaturspezifischen Parameter, insbesondere der Katalysatoreffizienz, der Abgas- oder der Kühlwassertemperatur, geöffnet wird. Dadurch wird sichergestellt, daß neben einer üblichen Ladedruckbegrenzung eine wenigstens teilweise Überbrückung des Abgasturboladers auch bei kaltem Motor stattfindet und somit durch ein Wärmeübertrager warmes Abgas eine schnellere Aufheizung des Katalysators erfolgt. Das Bypassventil wird geschlossen, wenn der Katalysator seine Betriebstemperatur erreicht hat.

Aus der DE 40 20 081 A1 ist eine Brennkraftmaschine, insbesondere ein Dieselmotor bekannt, die einen Startbypass aufweist, der während des Startvorgangs nur für eine kurze, vorgebbare Zeit geöffnet ist und dessen Bypassventil dazu über eine Druckdose mit einer gesonderten Überdruckquelle verbindbar ist, während das Ventil im anschließenden Normalbetrieb als übliches Wastegateventil fungiert. In einem weiteren Beispiel sind zwei Bypasskanäle vorgesehen, wobei in einem ersten Kanal ein übliches Wastegateventil positioniert ist, während der andere Kanal zur Senkung des Abgasgegendrucks während des Motor-starts vorgesehen ist, wozu ein eingebrachtes Bypassventil über eine Druckdose geöffnet werden kann, die wahlweise durch Über- oder Unterdruck ansteuerbar ist.

Die Patentschrift US 4.437.311 zeigt eine gattungsgemäße Brennkraftmaschine, bei der die eine Druckkammer der Bidruckdose der Bypassventil-Steuermittel mit einem Saugrohrabschnitt stromaufwärts einer Drosselklappe und stromabwärts des Verdichters des Abgasturboladers und über einen weiteren Leitungszweig, in den eine Drossel eingebracht ist, mit einem Saugrohrabschnitt stromaufwärts des Verdichters in Verbindung steht. Die andere Druckkammer steht mit einem Ventilanschluss eines Bimetall-Schaltventils in Verbindung, das andererseits über eine Drosselleitung mit dem Ansaugtrakt stromabwärts der Drosselklappe in Verbindung steht. Über einen dritten Anschluss steht das Schaltventil mit dem Ansaugtrakt stromabwärts des Verdichters in Verbindung. Die beiden letztgenannten Schaltventil-Anschlussleitungen sind über ein Rückschlagventil gekoppelt. Das Bimetallelement des Schaltelements reagiert auf die Temperatur eines Kühlmittels für die Brennkraftmaschine.

In der Patentschrift US 4.235.076 ist eine gattungsgemäße Brennkraftmaschine offenbart, bei der die eine Druckkammer der Bidruckdose über ein Magnetventil wahlweise mit Atmosphäre oder einem Saugrohrabschnitt der Brennkraftmaschine verbunden wird, während die andere Druckkammer über ein weiteres Magnetventil wahlweise mit dem Saugrohrabschnitt oder mit dem Ausgang eines Druckreglers verbunden wird, der an eine von der Brennkraftmaschine angetriebene Luftpumpe angeschlossen ist. Während eines Kaltstarts ist die letztgenannte Druckkammer mit dem vom Druckregler gelieferten Druck beaufschlagt, während die andere Druckkammer mit dem Saugrohrabschnitt verbunden ist. Dadurch öffnet das Bypassventil bei normaler oder niedriger Motorlast, während es bei hoher Motorlast schließt. Sobald der Abgaskatalysator eine vorgegebene Betriebstemperatur erreicht hat, schalten die Magnetventile das Bypassventil um, so dass dann die erstgenannte Druckkammer mit Atmosphäre und die andere Druckkammer mit dem Saugrohrabschnitt verbunden ist.

Der Erfindung liegt als technisches Problem die Bereitstellung einer Brennkraftmaschine der eingangs genannten Art zugrunde, die bei einfachem Aufbau eine verbesserte Abgasreinigung ermöglicht.

Dieses Problem wird mit der Brennkraftmaschine nach Anspruch 1 gelöst. Bei dieser Brennkraftmaschine sind ein Abgasstrang mit einem Abgaskatalysator, ein mit seiner Abgasturbine stromaufwärts des Abgaskatalysators angeordneter Abgasturbolader und eine Bypassleitung vorgesehen, die einerseits stromaufwärts der Abgasturbine und andererseits zwischen der Abgasturbine und dem Abgaskatalysator in den Abgasstrom mündet. Die Bypassleitung ist mit einem steuerbaren Bypassventil versehen. Das Bypassventil wird durch die zugehörigen Steuermittel, die eine Bidruckdose mit zwei getrennten Druckkammern und eine an das Bypassventil angekoppelte, in Abhängigkeit von der Differenz der Drücke in den beiden Druckkammern bewegbare Betätigungsstange umfassen, nach einem Motorstart während eines Katalysator-Aufheizzeitraums wenigstens teilweise offen gehalten, zumindest solange die Motorlast unter einem vorgebbaren Schwellwert liegt. Das dadurch an der Abgasturbine vorbei direkt auf den Abgaskatalysator geleitete Abgas gibt weniger Wärmeenergie ab als bei Führung über die Abgasturbine und vermag folglich den Abgaskatalysator nach einem Motorstart schneller aufzuheizen und damit auf Betriebstemperatur zu bringen. Überschreitet die Motorlast den zugehörigen Schwellwert, wird das Bypassventil geschlossen gehalten, so dass der Abgasturbolader den dann wünschenswerten Ladeluft-Überdruck zu erzeugen vermag.

Charakteristischerweise sind dazu spezielle Steuermittel vorgesehen, welche nach einem Motorstart während eines Katalysator-Aufheizzeitraums wenigstens bei unterhalb eines vorgebbaren Schwellwertes liegender Motorlast die erste Druckkammer des Bypassventils mit Atmosphäre und die zweite Druckkammer mit einem Saugrohrabschnitt der Brennkraftmaschine verbinden, während sie ansonsten zwecks Schließen des Bypassventils die erste Druckkammer mit dem Saugrohrabschnitt und die zweite Druckkammer mit Atmosphäre verbinden.

In Weiterbildung der Erfindung nach Anspruch 2 ist vorgesehen, daß die Bypassventil-Steuermittel eine Ventilsteuereinheit sowie ein Über- und ein Unterdruckventil umfassen, wobei die erste Druckkammer über das ansteuerbare Überdruckventil und die zweite Druckkammer über das ansteuerbare Unterdruckventil jeweils wahlweise mit Atmosphäre oder mit einem Saugrohrabschnitt der Brennkraftmaschine verbindbar sind. Die Ventilsteuereinheit steuert das Überdruckventil und das Unterdruckventil derart an, daß nach dem Starten der Brennkraftmaschine während eines Katalysator-Aufheizzeitraums wenigstens bei unterhalb eines vorgebbaren Schwellwertes liegender Motorlast zwecks Öffnen des Bypassventils die erste Druckkammer mit Atmosphäre und die zweite Druckkammer mit dem Saugrohrabschnitt und ansonsten zwecks Schließen des Bypassventils die erste Druckkammer mit dem Saugrohrabschnitt und die zweite Druckkammer mit Atmosphäre verbunden sind. Mit einfachen Mitteln wird hierdurch eine verbesserte Abgasreinigung nach einem Motorstart, insbesondere einem Kaltstart, verwirklicht.

Ein bevorzugtes Ausführungsbeispiel der Erfindung ist in den beiliegenden Zeichnungen dargestellt und wird nachfolgend beschrieben. Hierbei zeigen:
- Fig. 1: eine schematische Darstellung einer erfindungsgemäßen Brennkraftmaschine und
- Fig. 2: eine Schnittansicht einer in dem Beispiel von Fig. 1 verwendeten Bidruckdose.

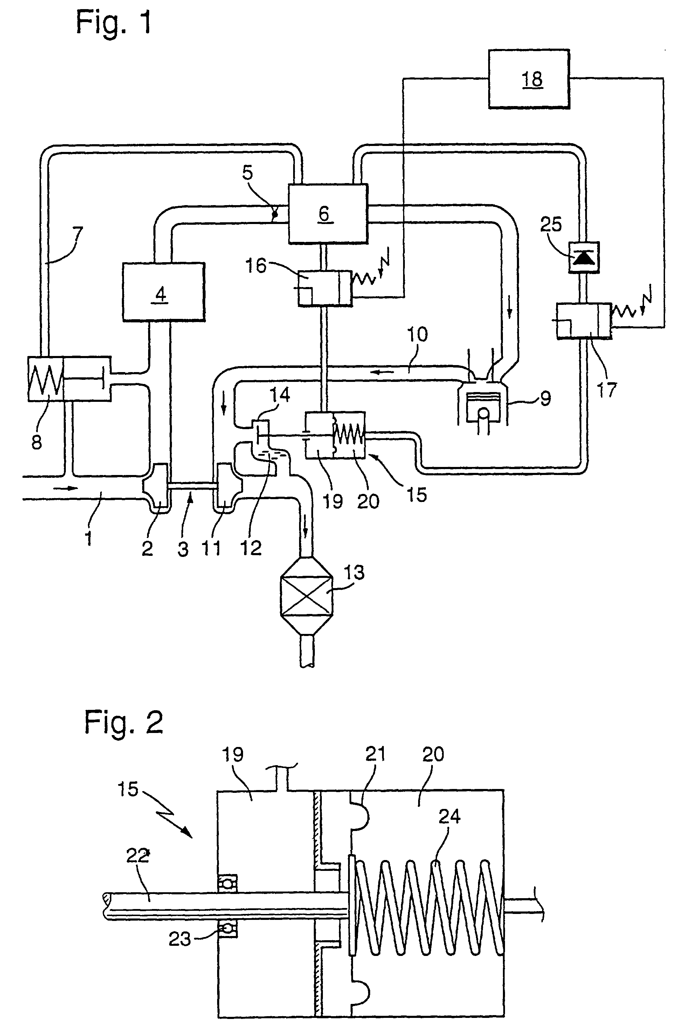

In der Fig.1 ist schematisch eine erfindungsgemäße Brennkraftmaschine dargestellt, die im vorliegenden Ausführungsbeispiel ein Hubkolbenmotor ist. In einer Einlaßluftleitung 1 ist ein Verdichter 2 eines Abgasturboladers 3 angeordnet, der einen Ladeluftkühler 4 beaufschlagt. Die über den Ladeluftkühler 4 geführte Luft tritt durch eine Drosselklappe 5 in ein Saugrohr 6 ein. Zur Steuerung der Einlaßluftverhältnisse im Schubbetrieb ist eine zusätzliche Leitung 7 mit einem Schubumluftventil 8 vorgesehen. Das Saugrohr 6 mündet in den Brennraum eines jeweiligen Zylinders 9, von dem der Abgasstrang 10 abführt. Stromabwärts des Brennraums ist im Abgasstrang 10 eine Abgasturbine 11 des Abgasturboladers 3 angeordnet.

Eine Bypassleitung 12 mündet einerseits stromaufwärts der Abgasturbine 11 und andererseits zwischen der Abgasturbine und einem stromabwärts der Abgasturbine liegenden Abgaskatalysator 13 in den Abgasstrang. Die Bypassleitung 12 kann durch ein Bypassventil 14, das auch als Waste-Gate-Ventil bezeichnet wird, geöffnet oder geschlossen werden, wobei Zwischenstellungen möglich sind. Das Bypassventil wird durch eine Bidruckdose 15 gesteuert. Die Bidruckdose 15 beinhaltet zwei Druckkammern 19, 20, von denen eine erste über ein elektromagnetisches Überdruckventil 16 und die andere über ein elektromagnetisches Unterdruckventil 17 und ein dazu seriell angeordnetes Rückschlagventil 25 sowie zugehörige Leitungen jeweils entweder mit dem im Saugrohr herrschenden Druck oder mit Atmosphärendruck beaufschlagt werden. Zur Steuerung der beiden Ventile 16 und 17 dient eine Ventilsteuereinheit 18, die Teil eines herkömmlichen Motorsteuergerätes sein kann. Der Ventilsteuereinheit 18 wird dabei auch der momentane Betriebszustand des Motors übermittelt.

Fig. 2 zeigt eine Schnittansicht der in dem Ausführungsbeispiel der Fig. 1 verwendeten Bidruckdose 15. Die beiden Druckkammern 19, 20 sind durch eine umfangsseitig festgelegte Membran 21 getrennt, an deren beweglichem Mittenbereich eine Betätigungsstange 22 zur Betätigung des Bypassventils 14 angebracht ist. Der Durchtritt der Betätigungsstange 22 durch die Wand der ersten Druckkammer 19 ist mit einer Abdichtung 23 abgedichtet. Die Membran 21 und damit die Betätigungsstange 22 werden durch eine Feder 24 in Schließrichtung des Bypassventils vorgespannt, so daß in der gezeigten Lage 0 der Membran 21 das Bypassventil 14 geschlossen ist.

Ist daher in der ersten 19 und der zweiten Druckkammer 20 der Bidruckdose derselbe Druck vorhanden, wird die Membran 21 durch die Federkraft der Feder 24 in dieser Lage 0 gehalten, in welcher die Betätigungsstange 22 das Bypassventil 14 in geschlossenem Zustand hält. Die Federkraft ist so bemessen, daß das Bypassventil zum einen durch einen Unterdruck im Saugrohr bei geringer Motorlast und zum anderen erst bei einem Überdruck im Saugrohr geöffnet wird, der dem gewünschten maximalen Saugrohrdruck des Hubkolbenmotors entspricht. Denn wenn die erste Druckkammer 19 mit ausreichend hohem Überdruck beaufschlagt und die zweite Druckkammer 20 mit Atmosphäre verbunden wird, verschiebt sich die Membran 21 gegen die Federkraft der Feder 24 und öffnet über die Betätigungsstange 22 das Bypassventil 14. Letzteres geschieht auch, wenn die erste Druckkammer 19 mit Atmosphärendruck und die zweite Druckkammer 20 mit Unterdruck beaufschlagt wird.

Damit ergibt sich folgende Betriebsweise der Brennkraftmaschine von Fig. 1. Vor einem Motorstart ist das Bypassventil 14 aufgrund der Zuhaltekraft der Feder 24 geschlossen, da die Druckdifferenz zwischen der ersten 19 und der zweiten Druckkammer 20 null ist. Sobald sich der Kolben im jeweiligen Zylinder 9 zu bewegen beginnt, entsteht im Brennraum während des Ansaugtakts ein Unterdruck, der sich auf das Saugrohr 6 überträgt. Läuft der Motor nach erfolgtem Start im Leerlauf oder mit unterhalb eines vorgebbaren Schwellwerts liegender Motorlast, reicht die dann vorhandene Abgasenergie nicht aus, über die Abgasturbine 11 und den Verdichter 2 des Abgasturboladers 3 im Saugrohr einen Überdruck zu erzeugen, so daß gegenüber Atmosphäre im Saugrohr Unterdruck herrscht. Dieser Betriebszustand des Motors mit unterhalb eines vorgebbaren Schwellwerts liegender Motorlast wird der Ventilsteuereinheit 18 übermittelt, die daraufhin die Ventile 16 und 17 derart schaltet, daß das Unterdruckventil 17 das Saugrohr 6 mit der zweiten Druckkammer 20 und das Überdruckventil 16 die erste Druckkammer 19 mit Atmosphäre verbindet. Die folglich zwischen den Druckkammern 19 und 20 vorhandene Druckdifferenz bewegt die Membran 21 und die angekoppelte Betätigungsstange 22 gegen die Kraft der Feder 24, so daß sich das Bypassventil 14 öffnet. Die geöffnete Bypassleitung 12 ermöglicht es dem Abgasstrom in der Abgasleitung 10, die Abgasturbine 11 zu umgehen, ohne an dieser Arbeit zu verrichten oder durch Wärmeleitung an diese Wärme abzugeben. Der Hauptanteil des Abgasstroms strömt daher durch die Bypassleitung 12 und kühlt dabei deutlich weniger ab als beim Durchströmen der Abgasturbine 11. Demzufolge wird der Abgaskatalysator 13 direkt von dem heißen Abgasstrom unter Umgehung der Abgasturbine beaufschlagt und heizt sich dadurch schneller auf, so daß er seine Abgasreinigungsfunktion früher erfüllen kann.

Wird der Ventilsteuerung 18 von der Motorelektronik übermittelt, daß der Katalysator 13 seine Betriebstemperatur erreicht hat oder ein Betriebszustand des Motors mit einer Motorlast größer als der vorgebbare Schwellwert vorliegt, schaltet diese die Ventile 16 und 17 derart, daß das Überdruckventil 16 die erste Druckkammer 19 mit dem Saugrohr 6 und das Unterdruckventil 17 die zweite Druckkammer 20 mit Atmosphäre verbindet. Durch diese Druckdifferenzänderung in der Bidruckdose 15 und die Federkraft der Feder 24 wird die Membran 21 dann wieder in die gezeigte Stellung 0 verschoben und über die Betätigungsstange 22 das Bypassventil 14 geschlossen. Das gesamte Abgas strömt daraufhin über die Abgasturbine 11, die wiederum den Verdichter 2 antreibt. Durch die Wirkung des Verdichters 2 entsteht im Saugrchr 6 der für den normalen Motorbetrieb gewünschte Ladeluft-Überdruck.

Der sich demgemäß bei warmgelaufenem Motor einstellende Saugrohrüberdruck beaufschlagt über das Überdruckventil 16 die erste Druckkammer 19 und damit die Membran 21 gegen die Federkraft der Feder 24. Bei Überschreiten eines durch die Feder 24 vorgebbaren maximalen Überdrucks im Saugrohr 6 liegt zwischen den zwei Druckkammern 19 und 20 der Bidruckdose 15 eine Druckdifferenz vor, die zum wenigstens teilweisen Öffnen des Bypassventils 14 führt. Dies realisiert die herkömmliche Begrenzung des Überdrucks im Saugrohr 6, d.h. des Ladedrucks.

Es versteht sich, daß erfindungsgemäß alternativ zu der gezeigten Ansteuerung der Bidruckdose 15 andersartige, herkömmliche Ventilsteuermittel für das Bypassventil 14 verwendbar sind, die so auszulegen sind, daß sie sowohl die erste als auch die zweite Druckkammer jeweils wahlweise mit Atmosphäre oder mit einem Saugrohrabschnitt der Brennkraftmaschine verbinden und dabei das Bypassventil 14 nach dem Starten der Brennkraftmaschine während eines Katalysator-Aufheizzeitraums wenigstens bei unterhalb eines vorgebbaren Schwellwertes liegender Motorlast wenigstens teilweise geöffnet halten.

## Patentansprüche

1. Brennkraftmaschine mit
- einem Abgasstrang (10) mit einem Abgaskatalysator (13),
- einem Abgasturbolader (3), dessen Abgasturbine (11) sich strömungsaufwärts des Abgaskatalysators im Abgasstrang befindet,
- einer Bypassleitung (12), die einerseits stromaufwärts der Abgasturbine und andererseits zwischen Abgasturbine und Abgaskatalysator in den Abgasstrang mündet,
- einem ansteuerbaren Bypassventil (14) in der Bypassleitung und
- Bypassventil-Steuermitteln (15), die das Bypassventil (14) nach dem Starten der Brennkraftmaschine während eines Katalysator-Aufheizzeitraums bei unterhalb eines vorgebbaren Motorlast-Schwellwerts liegender Motorlast wenigstens teilweise geöffnet und bei oberhalb des Motorlast-Schwellwerts liegender Motorlast geschlossen halten und eine Bidruckdose (15) mit zwei getrennten Druckkammern (19, 20) und einer an das Bypassventil (14) angekoppelten, in Abhängigkeit von der Differenz der Drücke in den beiden Druckkammern bewegbaren Betätigungsstange (22) aufweisen,
**dadurch gekennzeichnet, daß**
- die Bypassventil-Steuermittel Mittel (16, 17, 18) zum wahlweisen Verbinden jeder der beiden Druckkammern mit Atmosphäre oder einem Saugrohrabschnitt (6) der Brennkraftmaschine derart aufweisen, dass nach dem Starten der Brennkraftmaschine während eines Katalysator-Aufheizzeitraums wenigstens bei unterhalb eines vorgebbaren Schwellwertes liegender Motorlast zwecks Öffnen des Bypassventils die erste Druckkammer (19) mit Atmosphäre und die zweite Druckkammer (20) mit dem Saugrohrabschnitt (6) und ansonsten zwecks Schließen des Bypassventils die erste Druckkammer (19) mit dem Saugrohrabschnitt (6) und die zweite Druckkammer (20) mit Atmosphäre verbunden sind.

2. Brennkraftmaschine nach Anspruch 1, weiter
**dadurch gekennzeichnet, dass**
die Mittel zur wahlweisen Verbindung jeder der beiden Druckkammern mit Atmosphäre oder mit dem Saugrohrabschnitt (6) der Brennkraftmaschine ein der ersten Druckkammer (19) zugeordnetes Überdruckventil (16), ein der zweiten Druckkammer (20) zugeordnetes Unterdruckventil (17) und eine das Überdruckventil und das Unterdruckventil steuernde Ventilsteuereinheit (18) umfassen.

## Claims

1. Internal combustion engine having
- an exhaust gas train (10) with an exhaust gas catalyst (13),
- an exhaust gas turbocharger (3), the exhaust gas turbine (11) of which is located upstream of the exhaust gas catalyst in the exhaust gas train,
- a bypass line (12) opening on the one hand upstream of the exhaust gas turbine and on the other hand between exhaust gas turbine and exhaust gas catalyst in the exhaust gas train,
- an actuatable bypass valve (14) in the bypass line and
- bypass valve-control means (15) which keep the bypass valve (14) at least partially open during a catalyst heating period after the internal combustion engine is started when the engine load is below a pre-settable engine load threshold value and closed when the engine load is above the engine load threshold value, a dual-pressure capsule (15) with two separate pressure chambers (19, 20) and an operating rod (22) coupled with the bypass valve (14) displaceable depending on the difference in pressures in the two pressure chambers,
**characterised in that**
- the bypass control means have means (16, 17, 18) for selectively connecting each of the two pressure chambers to the atmosphere or an intake pipe section (6) of the internal combustion engine so that during a catalyst heating period when the internal combustion engine is started, at least when the engine load is below a pre-settable threshold value, the first pressure chamber (19) is connected to the atmosphere and the second pressure chamber (20) to the intake pipe section (6) in order to open the bypass valve and otherwise the first pressure chamber (19) is connected to the intake pipe section (6) and the second pressure chamber (20) to the atmosphere in order to close the bypass valve.

2. Internal combustion engine as claimed in claim 1, further
**characaterised in that**
the means for selectively connecting each of the two pressure chambers to the atmosphere or to the intake pipe section (6) of the internal combustion engine comprise a pressure relief valve (16) co-operating with the first pressure chamber (19), a vacuum valve (17) co-operating with the second pressure chamber (20) and a valve control unit (18) controlling the pressure relief valve and the vacuum valve.

## Revendications

1. Moteur à combustion interne comportant:
- une section (10) de circulation des gaz d'échappement comportant un catalyseur (13) pour les gaz d'échappement,
- un turbocompresseur à gaz d'échappement (3), dont la turbine à gaz d'échappement (11) est située en amont du catalyseur pour les gaz d'échappement dans la section de circulation des gaz d'échappement,
- une canalisation de by-pass (12) qui débouche d'une part en amont de la turbine à gaz d'échappement et d'autre part entre la turbine à gaz d'échappement et le catalyseur pour les gaz d'échappement dans la section de circulation des gaz d'échappement,
- une soupape de by-pass commandable (14) située dans la canalisation de by-pass, et
- des moyens (15) de commande de la soupape de by-pass, qui, après le démarrage du moteur à combustion interne, maintiennent au moins partiellement ouverte la soupape de by-pass (14) pendant un intervalle de temps d'échauffement du catalyseur, pour une charge du moteur inférieure à une valeur de seuil pouvant être prédéterminée, et maintient la soupape à l'état fermé lorsque la charge du moteur est supérieure à sa valeur de seuil, et une capsule de pression (15) comportant deux chambres de pression séparés (19, 20) et une tige d'actionnement (22) qui est couplée à la soupape de by-pass (14) et est déplaçable en fonction de la différence des pressions dans les deux chambres de pression,
**caractérisé en ce que**
- les moyens de commande de la soupape de by-pass comportent des moyens (16, 17,18) servant à relier au choix chacune des deux chambres de pression à l'atmosphère ou à une section (6) d'un tube d'aspiration d'un moteur à combustion interne de telle sorte qu'après le démarrage du moteur à combustion interne, pendant un intervalle de temps d'échauffement du catalyseur, au moins lorsque la charge du moteur est inférieure à une valeur de consigne pouvant être prédéterminée, la première chambre de pression (19) est reliée à l'atmosphère pour l'ouverture de la soupape de by-pass et la seconde chambre de pression (20) est reliée à la section (6) du tube d'aspiration, et sinon, pour la fermeture de la soupape de by-pass, la première chambre de pression (19) est reliée à la section (6) du tube d'aspiration et la seconde chambre de pression (20) est reliée à l'atmosphère.

2. Moteur à combustion interne selon la revendication 1, **caractérisé en outre en ce que** les moyens pour relier au choix chacune des deux chambres de pression à l'atmosphère ou à la section (6) du tube d'aspiration du moteur à combustion interne, comprennent une soupape de surpression (16), qui est associée à la première chambre de pression (19), une soupape de dépression (17), qui est associée à la seconde chambre de pression (20), et une unité de commande (18), qui commande la soupape de surpression et la soupape de dépression.
